(19) Europäisches Patentamt
European Patent Office
Office européen des brevets

(11) **EP 3 662 229 B1**

(12) **EUROPÄISCHE PATENTSCHRIFT**

(45) Veröffentlichungstag und Bekanntmachung des Hinweises auf die Patenterteilung:
**07.06.2023   Patentblatt 2023/23**

(21) Anmeldenummer: **18745917.7**

(22) Anmeldetag: **24.07.2018**

(51) Internationale Patentklassifikation (IPC):
**G01C 21/00** $^{(2006.01)}$    **G05D 1/02** $^{(2020.01)}$

(52) Gemeinsame Patentklassifikation (CPC):
**G05D 1/0272; G01C 21/005; G05D 1/024; G05D 1/0274**

(86) Internationale Anmeldenummer:
**PCT/EP2018/070040**

(87) Internationale Veröffentlichungsnummer:
**WO 2019/025241 (07.02.2019 Gazette 2019/06)**

(54) **VERFAHREN ZUR LAGEBESTIMMUNG EINES ROBOTERS, LAGEBESTIMMUNGSVORRICHTUNG EINES ROBOTERS UND ROBOTER**

METHOD FOR DETERMINING THE ORIENTATION OF A ROBOT, ORIENTATION DETERMINATION APPARATUS OF A ROBOT, AND ROBOT

PROCÉDÉ DE DÉTERMINATION DE LA POSITION D'UN ROBOT, DISPOSITIF DE DÉTERMINATION DE LA POSITION D'UN ROBOT ET ROBOT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.08.2017   DE 102017213577**

(43) Veröffentlichungstag der Anmeldung:
**10.06.2020   Patentblatt 2020/24**

(73) Patentinhaber: **Robert Bosch GmbH 70442 Stuttgart (DE)**

(72) Erfinder: **BIBER, Peter 72119 Poltringen (DE)**

(56) Entgegenhaltungen:
**EP-A2- 2 749 983      WO-A1-2017/066904 WO-A1-2017/076929**

• GOEL P ET AL: "Robust localization using relative and absolute position estimates", INTELLIGENT ROBOTS AND SYSTEMS, 1999. IROS '99. PROCEEDINGS. 1999 IEEE /RSJ INTERNATIONAL CONFERENCE ON KYONGJU, SOUTH KOREA 17-21 OCT. 1999, PISCATAWAY, NJ, USA,IEEE, US, Bd. 2, 17. Oktober 1999 (1999-10-17), Seiten 1134-1140, XP010362491, DOI: 10.1109/IROS.1999.812832 ISBN: 978-0-7803-5184-4

**Beschreibung**

Stand der Technik

Die Erfindung betrifft ein Verfahren zur Lagebestimmung eines Roboters, insbesondere eines autonomen Roboters. Des Weiteren betrifft die Erfindung einen derartigen Roboter, insbesondere autonomen Roboter. Druckschriftlich wird beispielsweise auf die Dokumente DE 10 2014 211 178 A1 sowie WO 2017/076929 A1, EP 2 749 983 A2, WO 2017/066904 A1 und GOEL P ET AL: "Robust localization using relative and absolute position estimates", INTELLIGENT ROBOTS AND SYSTEMS, 1999, IROS '99 verwiesen.

Offenbarung der Erfindung

Die Erfindung betrifft ein Verfahren zur Lagebestimmung eines Roboters, insbesondere eines autonomen Roboters, mit den Merkmalen des Anspruchs 1.

In einer Ausführungsform können die Verfahrensschritte auch in einem einzigen Verfahrensschritt implementiert sein.

Unter einem "Roboter", insbesondere "autonomen Roboter", soll insbesondere ein zumindest teilweise automatisches mobiles Gerät verstanden werden, welches eine Arbeit, bevorzugt eine Bearbeitung einer Fläche - der sog. Bearbeitungsfläche -, zumindest teilweise selbsttätig verrichtet. Insbesondere soll der Roboter eine Arbeit selbsttätig beginnen, selbsttätig beenden und/oder selbsttätig zumindest einen Parameter betreffend die Bearbeitung der Bearbeitungsfläche auswählen und/oder beeinflussen. Darüber hinaus soll insbesondere ein Gerät verstanden werden, das sich zumindest zur Verrichtung dieser Arbeit, insbesondere zur Bearbeitung der Bearbeitungsfläche, selbsttätig bewegt und/oder sich autonom in dem vorgegebenen Arbeitsbereich der Bearbeitungsfläche fortbewegt. Typische Anwendungsgebiete solcher Roboter umfassen vielfältige Tätigkeiten wie beispielsweise kehren, saugen, reinigen, Rasen mähen, (ein)sammeln, sortieren, bewässern, düngen, kartieren oder dergleichen. Daher können relevante Grundsätze und technische Lehren der im Folgenden zur Veranschaulichung der Vorteile der Erfindung aufgezeigten Ausführungsbeispiele selbstverständlich auf beliebige Roboter, insbesondere autonome Roboter, beispielsweise insbesondere autonome Kehrmaschinen, autonome Reinigungsroboter, autonome Schneeräumroboter, autonome Staubsauger, autonome Schwimmbadreinigungsmaschine, autonome Bodenwischroboter, autonome Rasenmäher, autonome Sähmaschinen, autonome Bewässerungsroboter, autonome Düngemaschinen, autonome Kartierungsmaschinen und dergleichen übertragen werden.

Automatische oder zumindest teilweise automatische mobile Arbeitsgeräte wie Roboter, insbesondere autonome Roboter wie beispielsweise Bodenbearbeitungsmaschinen, sollen sich in der Regel selbsttätig innerhalb eines definierten Arbeitsbereiches bewegen, ohne diesen zu verlassen. Dafür ist eine Lagebestimmung des Roboters notwendig, insbesondere im Rahmen eines Verfahrens zur Lagebestimmung des Roboters. Unter "Verfahren zur Lagebestimmung des Roboters" soll daher ein Verfahren verstanden werden, das zumindest in Verbindung mit einem Navigationsverfahren oder als Teil eines Navigationsverfahrens des Roboters einer Ortsveränderung, insbesondere der kinematischen Bewegung, des Roboters dient und insbesondere eine autonome mobile Bewegung des Roboters überhaupt erst ermöglicht.

In einer Ausführungsform des Verfahrens kann das Verfahren zur Lagebestimmung auch als ein von einem Navigationsverfahren unabhängiges Verfahren realisiert sein. Das Navigationsverfahren kontrolliert, koordiniert und steuert beispielsweise Aufgaben zu Pfadplanung und Bewegungssteuerung des Roboters. Insbesondere werden im Rahmen eines Navigationsverfahrens Aufgaben durchgeführt wie beispielsweise die Berechnung eines Bewegungsplans, die Berechnung einer Fahrtrichtung, das Initiieren einer Bewegung, die Steuerung und/oder Regelung einer Bewegung, insbesondere nach einem Bewegungsplan, das Reagieren auf Hindernisse auf der Bearbeitungsfläche und/oder das Reagieren auf Begrenzungen der Bearbeitungsfläche. Zur Durchführung des Navigationsverfahrens werden typischerweise Lagedaten, d.h. Angaben betreffend eine Position und/oder eine Ausrichtung des Roboters im Raum, insbesondere auf einer Fläche, bevorzugt auf der Bearbeitungsfläche, benötigt. Die Bestimmung und Bereitstellung derartiger Lagedaten, d.h. insbesondere die Bestimmung einer Position und/oder einer Ausrichtung des Roboters im Raum und/oder auf einer Fläche, ist hingegen Aufgabe des Verfahrens zur Lagebestimmung. Typische Teilaufgaben eines derartigen Verfahrens betreffen beispielsweise ein Bestimmen einer relativen und/oder absoluten aktuellen Position des Roboters, ein Vermessen von Positions- und/oder Odometriedaten, ein Berechnen einer zurückzulegenden Distanz und dergleichen.

In dem vorliegenden Verfahren werden in einem Verfahrensschritt erwartete, insbesondere vorhergesagte, möglicherweise ungenaue, Lagedaten $pp$ zu einer erwarteten Lage des Roboters bereitgestellt. Unter "erwarteten Lagedaten $p_p^t$ " sind insbesondere Daten betreffend eine Position und/oder eine Ausrichtung des Roboters im Raum und/oder auf einer Fläche zu verstehen, die einer noch nicht verifizierten Lage des Roboters zuzuordnen sind. In einer Ausführungsform des Verfahrens kann es sich bei den erwarteten Lagedaten $pp$ prinzipiell einfach um einen ersten Datensatz an Lagedaten handeln, ungeachtet einer bestimmten Eigenschaft der Lagedaten oder deren Zustandekommen. Beispielsweise können die erwarteten Lagedaten $p_p^t$ als Daten einer ersten Sensorvorrichtung des Roboters bereitgestellt werden. Alternativ können die erwarteten Lagedaten $pp$ als bestimmte Bedingungen erfüllende Lagedaten angesehen werden, beispielsweise als verhältnismäßig ungenaue Lagedaten. Alternativ können die erwarteten Lagedaten $p_p^t$ als geschätzte oder prognostizierte Lagedaten bereitgestellt werden. Alternativ können die erwarteten Lagedaten $p_p^t$ als letzte gültige, insbesondere letzte verifizierte, Lagedaten des Roboters bereitgestellt werden.

In einer Ausführungsform des Verfahrens werden die erwarteten Lagedaten $p_p^t$ mittels zumindest einer ersten Sensorvorrichtung des Roboters bereitgestellt, insbesondere gemessen oder erfasst und anschließend bereitgestellt. Die erste Sensorvorrichtung ist insbesondere als eine Vorrichtung zur Ermittlung von Lagedaten, bevorzugt Positionsdaten und/oder Odometriedaten und/oder Ausrichtungsdaten, ausgebildet und kann dazu einen oder mehrere Sensoren aus einer Gruppe von Sensoren aufweisen, die zumindest neigungs-, winkel-, abstands-, translations-, beschleunigungs- sowie drehratensensitive Sensoren umfasst. Beispielsweise lässt sich die erste Sensorvorrichtung unter Verwendung von zum Antrieb des Roboters verwendeten Antriebsmitteln realisieren. Beispielsweise lassen sich insbesondere Drehungen von Wälzkörpern, Rädern, Ketten oder dergleichen, die sich beim Verfahren des Roboters bezogen auf die Bearbeitungsfläche drehen, zur Bestimmung einer Positionsänderung und/oder Odometrieänderung und/oder Ausrichtungsänderung auswerten. Insbesondere ist die Sensorvorrichtung, eventuell in Kombination mit einer Recheneinheit, dazu ausgelegt, zurückgelegte Streckenlängen in Fahrtrichtung des sich auf einer Bahn bewegenden Roboters, bevorzugt auch einen zurückgelegten Fahrwinkel auf der Bahn, zu ermittelt. Alternativ oder zusätzlich kann die erste Sensorvorrichtung auch weitere Sensoren zur Ermittlung von Lagedaten umfassen. Beispielsweise kann eine Lagebestimmung auch unter Verwendung von GPS-Sensoren, Echo-Sensoren, Sonar-Sensoren, Ultraschall-Sensoren, Radar-Sensoren, Entfernungs-Sensoren, LIDAR-Sensoren (Light Detection and Ranging), Kamera-Sensoren, Stereokamera-Sensoren, Intertial-Sensoren oder anderen, einem Fachmann als sinnvoll erscheinenden Sensoren zur Ermittlung von Positionsdaten und/oder Odometriedaten und/oder Ausrichtungsdaten, realisiert sein. Es sei darauf hingewiesen, dass die erste Sensorvorrichtung zur Bereitstellung der erwarteten Lagedaten $p_p^t$ auch dazu vorgesehen sein kann, Lagedaten unter Verwendung einer Mehrzahl derartiger Sensoren bereitzustellen, insbesondere zu messen oder zu erfassen und anschließend bereitzustellen. Beispielsweise können aus von mehreren Sensoren bereitgestellten Sensordaten die erwarteten Lagedaten $p_p^t$ berechnet werden, insbesondere fusioniert oder gemittelt werden.

In einem Ausführungsbeispiel werden die erwarteten Lagedaten $pp$ mittels einer ersten Sensorvorrichtung wiederholt, insbesondere kontinuierlich oder quasi-kontinuierlich, gemessen und bereitgestellt, wobei die erste Sensorvorrichtung unter Verwendung von zum Antrieb des Roboters verwendeten Antriebsmitteln als Odometrie-Sensorvorrichtung realisiert ist. Beispielsweise werden die Lagedaten im mit einer Frequenz von 50 Hz gemessen und somit aktualisiert bereitgestellt (im Falle von mittels Inertialsensorik bereitgestellter erwarteter Lagedaten $p_p^t$ kann eine Frequenz von bis zu 2000 Hz genutzt sein).

Unter "vorgesehen" soll insbesondere speziell "programmiert", "ausgelegt", "eingerichtet" und/oder "ausgestattet" verstanden werden. Darunter, dass ein Objekt zu einer bestimmten Funktion "vorgesehen" ist, soll insbesondere verstanden werden, dass das Objekt diese bestimmte Funktion in zumindest einem Anwendungs- und/oder Betriebszustand erfüllt und/oder ausführt oder dazu ausgelegt ist, die Funktion zu erfüllen.

In einer alternativen oder zusätzlichen Ausführungsform des Verfahrens werden die erwarteten Lagedaten $p_p^t$ basierend auf zuvor bestimmten tatsächlichen Lagedaten $pü$ bereitgestellt. Beispielsweise ist denkbar, die erwarteten Lagedaten $p_p^t$ als die letzte verifizierte Lage des Roboters anzunehmen - d.h. beispielsweise als die letzten tatsächlichen Lagedaten $p_u^{t-1}$, sofern die letzten tatsächlichen Lagedaten $p_u^{t-1}$ ausreißerfreie Lagedaten darstellen/darstellten.

In dem vorliegenden Verfahren werden in einem Verfahrensschritt tatsächliche, insbesondere gemessene, bevorzugt gegenüber den erwarteten Lagedaten $p_p^t$ verhältnismäßig genaue, Lagedaten $pü$ zu einer tatsächlichen Lage des Roboters bereitgestellt. Unter "tatsächlichen Lagedaten $p_u^t$" sind insbesondere Daten betreffend eine Position und/oder eine Ausrichtung des Roboters im Raum und/oder auf einer Fläche zu verstehen, die einer genauen oder zumindest genaueren Bestimmung der Lage des Roboters zuzuordnen sind. In einer Ausführungsform des Verfahrens kann es sich bei den tatsächlichen Lagedaten $p_u^t$ prinzipiell einfach um einen zweiten Datensatz an Lagedaten handeln, ungeachtet einer bestimmten Eigenschaft der Lagedaten oder deren Zustandekommen. Beispielsweise können die tatsächlichen Lagedaten $p_u^t$ als Daten einer zweiten Sensorvorrichtung des Roboters bereitgestellt werden. Alternativ können die tatsächlichen Lagedaten pü als bestimmte Bedingungen erfüllende Daten angesehen werden, beispielsweise als genauere Daten im Vergleich zu den erwarteten Lagedaten $p_p^t$. Alternativ können die tatsächlichen Lagedaten $p_u^t$ als gemessene Lagedaten bereitgestellt werden, beispielsweise im Gegensatz zu geschätzten oder prognostizierten oder vorausberechneten erwarteten Lagedaten $p_p^t$.

In einer Ausführungsform des Verfahrens werden die tatsächlichen Lagedaten $p_u^t$ mittels zumindest einer zweiten Sensorvorrichtung des Roboters bereitgestellt, insbesondere als absolute Lagedaten erfasst und bereitgestellt. Die zweite Sensorvorrichtung ist insbesondere als eine Vorrichtung zur Ermittlung von Lagedaten, bevorzugt Positionsdaten und/oder Odometriedaten und/oder Ausrichtungsdaten, ausgebildet und kann prinzipiell in einer Ausführungsform entsprechend zumindest einer der Ausführungen zur ersten Sensorvorrichtung realisiert sein. In einer Ausführungsform ist die zweite Sensorvorrichtung dazu vorgesehen, absolute Lagedaten zu messen und bereitzustellen. Unter absoluten Lagedaten sollen insbesondere "nicht relativ gemessene" Lagedaten verstanden werden, die eine Angabe der Lage des Roboters ohne Bezug zu zuvor gemessenen Lagedaten erlauben.
Es sei an dieser Stellen angemerkt, dass auch die zweite Sensorvorrichtung zur Bereitstellung der tatsächlichen Lagedaten $p_u^t$ dazu vorgesehen sein kann, Lagedaten unter Verwendung einer Mehrzahl von Sensoren bereitzustellen, insbesondere zu messen oder zu erfassen und anschließend bereitzustellen. Beispielsweise können aus von mehreren Sensoren bereitgestellten Sensordaten die tatsächlichen Lagedaten pü berechnet werden, insbesondere gemittelt oder anderweitig fusioniert werden.

In einer Ausführungsform des Verfahrens werden die tatsächlichen Lagedaten $p_u^t$ mittels eines Kartenabgleich-Verfahrens von mittels der ersten Sensorvorrichtung und/oder mittels der zweiten Sensorvorrichtung bereitgestellten Lagedaten, ermittelt und bereitgestellt. Unter einem Kartenabgleich-Verfahren ist ein Verfahren zu verstehen, bei dem die bereitgestellten Lagedaten, insbesondere die mittels der ersten Sensorvorrichtung und/oder mittels der zweiten Sensorvorrichtung erfassten oder gemessenen Lagedaten, des Roboters und/oder einer vermessenen Umgebung des Roboters mit Lagedaten einer digitalen Karte, insbesondere einer auf dem Roboter abgespeicherten Karte, abgeglichen werden und daraus die tatsächlichen Lagedaten $p_u^t$ bestimmt werden.
In einem Ausführungsbeispiel werden die tatsächlichen Lagedaten pü mittels eines Kartenabgleich-Verfahrens von mittels der ersten Sensorvorrichtung bereitgestellten Lagedaten ermittelt, wobei die ersten Sensorvorrichtung erwartete Lagedaten $p_p^t$ auf Basis von Positions- und/oder Odometriedaten bestimmt.
In einem alternativen oder zusätzlichen Ausführungsbeispiel werden mittels eines LIDAR-Sensors der zweiten Sensorvorrichtung wiederholt, insbesondere kontinuierlich oder quasi-kontinuierlich, Umgebungsdaten gemessen und bereitgestellt. Unter "Umgebungsdaten" sind insbesondere Entfernungen des Roboters zu den Roboter umgebenden Gegenständen zu verstehen. Beispielsweise werden diese Umgebungsdaten (im weiteren Sinne auch Lagedaten) mit einer Frequenz von 1 bis 100 Hz gemessen und somit aktualisiert bereitgestellt (typische Frequenzen können beispielsweise sein: LIDAR-Sensors 10-100 Hz; Kamera-Sensor 10-100 Hz; GPS-Sensor 1-10 Hz). Diese Lagedaten werden anschließend mit Lagedaten einer digitalen Karte abgeglichen. Die digitale Karte liegt dabei geräteintern auf dem Roboter abgespeichert vor oder wird mittels einer Datenkommunikationsschnittstelle von einer externen Speichervorrichtung (beispielsweise einem Computer, einem Server oder dergleichen) geladen. Alternativ kann der Abgleich mit der digitalen Karte auch auf einem geräteexternen Server durchgeführt werden. Es sei angemerkt, dass eine Taktrate oder Wiederholrate des erfindungsgemäßen Verfahrens jedoch von einer Taktrate eines verwendeten Sensors unabhängig gewählt sein kann.

In einer Ausführungsform des Verfahrens werden die erwarteten Lagedaten $p_p^t$ und die tatsächlichen Lagedaten pü miteinander abgeglichen, um Abweichungen und/oder Fehler insbesondere in den erwarteten (typischerweise ungenaueren) Lagedaten $p_p^t$ feststellen zu können. Sollten derartige Abweichungen und/oder Fehler auftreten, d.h.

die erwarteten Lagedaten $p_p^t$ und die tatsächlichen Lagedaten pü stimmen nicht im Rahmen einer tolerierbaren Abweichung überein, so können die erwarteten Lagedaten $p_p^t$ unter Verwendung der tatsächlichen Lagedaten $p_u^t$ korrigiert, insbesondere überschrieben werden. Folglich werden bei Feststellen einer derartigen Abweichung und/oder eines derartigen Fehlers die tatsächlichen (typischerweise genaueren) Lagedaten $p_u^t$ für eine weitere Lagebestimmung des Roboters verwendet.

Allerdings kann es auch bei den tatsächlichen Lagedaten $p_u^t$ zu Fehlmessungen und/oder Doppeldeutigkeiten kommen. So können beispielsweise mit der zweiten Sensorvorrichtung ermittelte Lagedaten - im Ausführungsbeispiel die mittels des LIDAR-Sensors gemessenen Umgebungsdaten einer Position von Objekten der Umgebung - von der im Rahmen eines Kartenabgleich-Verfahrens ermittelten abgebildeten Position des Objektes in der Karte abweichen. Der Grund dafür kann in Messfehlern der Sensorvorrichtung (dem LIDAR-Sensor) und/oder in Ungenauigkeiten der Karte und/oder in Fehlern des Kartenabgleich-Verfahrens liegen. Insbesondere kann bei derartigen Fehlmessungen und/oder Doppeldeutigkeiten das Risiko bestehen, die, insbesondere ungenauen, erwarteten Lagedaten $p_p^t$ im Verfahren zur Lagebestimmung durch falsche tatsächliche Lagedaten $p_u^t$ zu ersetzen und derart eine Ungenauigkeit in der Lagebestimmung zu erhöhen.

Erfindungsgemäß werden daher in einem, insbesondere weiteren, Verfahrensschritt unter Verwendung der erwarteten Lagedaten $p_p^t$ und der tatsächlichen Lagedaten $p_u^t$ ausreißerfreie Lagedaten ermittelt, die für die Lagebestimmung des Roboters verwendet werden. Durch das erfindungsgemäße Verfahren kann vorteilhaft eine einfache und gezielte Detektion von Ausreißern in den zu verwendenden Lagedaten $p_p^t$ und $p_u^t$ realisiert werden, sodass anschließend ausreißerfreie Lagedaten, insbesondere basierend auf den erwarteten Lagedaten $p_p^t$ und/oder den tatsächlichen Lagedaten $p_u^t$, für eine weitere Lagebestimmung des Roboters bereitstehen. Insbesondere kann auf diese Weise sichergestellt werden, dass nur solche Lagedaten für eine Lagebestimmung verwendet werden, die nicht fehlerbehaftet oder inkonsistent sind, d.h. die keine Ausreißer darstellen. Die Genauigkeit und Zuverlässigkeit der Lagebestimmung des Roboters kann folglich erheblich erhöht werden.

In einer Ausführungsform des erfindungsgemäßen Verfahrens werden zur Bestimmung ausreißerfreier Lagedaten wechselseitig konsistente erwartete Lagedaten $p_p^t$ und tatsächliche Lagedaten $p_u^t$ mittels einer Ähnlichkeitsanalyse der erwarteten Lagedaten $p_p^t$ und der tatsächlichen Lagedaten $p_u^t$ ermittelt. Unter einer "Ähnlichkeitsanalyse" ist insbesondere eine Methode zu verstehen, mittels der ein Maß für die wechselseitige Konsistenz der erwarteten Lagedaten $p_p^t$ und der tatsächlichen Lagedaten pü bestimmbar ist. Somit lassen sich Ausreißer sowohl in den erwarteten Lagedaten $p_p^t$ als auch in den tatsächlichen Lagedaten $p_u^t$ besonders leicht detektieren.

Erfindungsgemäß werden wechselseitig konsistente erwartete Lagedaten $p_p^t$ und tatsächliche Lagedaten pü unter Aufstellung einer Ähnlichkeitsmatrix W ermittelt. Eine "Ähnlichkeitsmatrix W" stellt dabei eine einfache Methode dar, mittels der erwartete Lagedaten $p_p^t$ und tatsächliche Lagedaten $p_u^t$ auf eine paarweise, d.h. wechselseitige, Konsistenz hin prüfbar sind. Insbesondere stellt eine Ähnlichkeitsmatrix eine Matrix von Einzelwerten dar, die die Ähnlichkeit zwischen zumindest zwei mehrdimensionalen Datenpunkten ausdrückt.

In einer beispielhaften Ausführungsform (allerdings ohne Beschränkung der Allgemeinheit) sei eine Lagebestimmung in zwei Dimensionen, d.h. in einer Fläche, betrachtet. Die Lage des Roboters sei gegeben durch $p = (x, y, \varphi)$. Dabei können $(x,y)$ karthesische Koordinaten in der Fläche darstellen, wobei $\varphi$ die Ausrichtung des Roboters bezeichnet (beispielsweise bezogen auf "Norden"). Die erwarteten Lagedaten $p_p^t$ zum Zeitpunkt t werden mit $p_p^t$ bezeichnet und die tatsächlichen Lagedaten zum Zeitpunkt t werden mit $p_u^t$ bezeichnet. Eine relative Bewegung des Roboters zwischen den Zeitpunkten t1 und t2 bezüglich der erwarteten Lagedaten und der tatsächlichen Lagedaten ist dann gegeben durch

$$\Delta p_p^{t1,t2} = p_p^{t1} \ominus p_p^{t2} \text{ bzw.}$$

$$\Delta p_u^{t1,t2} = p_u^{t1} \ominus p_u^{t2},$$

wobei $\ominus$ einen Differenzoperator zwischen Lagen des Roboters darstellt. Im Falle ausreißfreier Lagedaten sollte die Differenz zwischen den erwarteten Lagedaten und die Differenz zwischen den tatsächlichen Lagedaten bis auf statistisch bedingtes Rauschen im Wesentlichen gleich sein, d.h. die Differenz zwischen $\Delta p_p^{t1,t2}$ und $\Delta p_u^{t1,t2}$ ist bis auf statistisch bedingtes Rauschen gleich Null:

$$\Delta^{t1,t2} = \Delta p_p^{t1,t2} \ominus \Delta p_u^{t1,t2} = 0$$

Ist diese Bedingung erfüllt, so werden die zu Grunde liegenden erwarteten Lagedaten $p_p^t$ und die zu Grunde liegenden tatsächlichen Lagedaten $p_u^t$ als paarweise oder wechselseitig konsistent angesehen.

Das statistische Rauschen kann mittels einer, insbesondere zeitabhängigen, Kovarianzmatrix $C^{t1,t2}$ quantifiziert werden. Der Fehler kann dann definiert sein als die durch die Kovarianzmatrix $C^{t1,t2}$ gewichtete Differenz $\Delta^{t1,t2}$, d.h.:

$$g^{t1,t2} = (\Delta^{t1,t2})^T C^{t1,t2} \Delta^{t1,t2}$$

Und die Ähnlichkeit kann mittels einer Gauß'schen Ähnlichkeitsfunktion spezifiziert werden:

$$s(g^{t1,t2}) = \exp\left(-g^{t1,t2}/2\right) = \exp\left((\Delta^{t1,t2})^T C^{t1,t2} \Delta^{t1,t2}/2\right),$$

wobei $(\Delta^{t1,t2})^T$ die transponierte Matrix von $\Delta^{t1,t2}$ darstellt.

Erfindungsgemäß wird die Ähnlichkeitsmatrix W als $(n \times n)$-Matrix basierend auf jeweils n erwarteten Lagedaten $p_p^t$ und n tatsächlichen Lagedaten pü, die jeweils zu n Zeiten $[t_s, t_{s+1}, ..., t_{s+n-1}]$, bevorzugt zu n äquidistanten Zeiten, bereitgestellt werden, aufgestellt. Auf diese Weise kann folglich eine $(n \times n)$-Ähnlichkeitsmatrix W aufgestellt werden mit den Werten $W_{i,j} = s(e^{t\_(s+i),t\_(s+j)})$. In einer Ausführungsform des erfindungsgemäßen Verfahrens wird die Anzahl n, insbesondere der zeitliche Abstand der Zeiten $[t_s, t_{s+1}, ... t_{s+n-1}]$, durch Vorgabe einer Auflösungsgenauigkeit der Lagebestimmung definiert. In einer Ausführungsform des erfindungsgemäßen Verfahrens ist $n \geq 3$, bevorzugt $n \geq 5$, besonders bevorzugt $n \geq 7$. Beispielsweise kann die Anzahl n durch eine erwünschte Anzahl von Messungen pro zurückgelegter Strecke des Roboters spezifiziert sein, beispielsweise durch 5 Messungen pro Meter. Mit einer derartigen Vorgabe kann ebenfalls auch der zeitliche Abstand der Zeiten $[t_s, t_{s+1}, ... t_{s+n-1}]$ festgelegt.

In einer Ausführungsform des erfindungsgemäßen Verfahrens werden mittels Clusteranalyse der Ähnlichkeitsmatrix W Sätze von jeweils wechselseitig konsistenten erwarteten Lagedaten pp und tatsächlichen Lagedaten $p_u^t$ ermittelt. Unter einer "Clusteranalyse" ist insbesondere eine Methode zur Aufdeckung von Ähnlichkeitsstrukturen in der Ähnlichkeitsmatrix W zu verstehen, d.h. der Ansatz, die heterogene Gesamtheit von "Fällen" in der Ähnlichkeitsmatrix W in homogene Gruppen oder Teilmengen oder sog. "Sätze" aufzuteilen. Dabei wird die Ähnlichkeit der Fälle auf allen relevanten Variablen berücksichtigt. Eine Methode der Clusteranalyse wird beispielsweise in "A tutorial on spectral clustering" von Luxburg (Statistics and computing, 2007, Springer Verlag)) vorgestellt.

In einer Ausführungsform des erfindungsgemäßen Verfahrens werden die tatsächlichen Lagedaten $p_u^t$ als ausreißerfreie Lagedaten für eine Lagebestimmung des Roboters verwendet, wenn genau ein Satz an wechselseitig konsistenten erwarteten Lagedaten pp und tatsächlichen Lagedaten $p_u^t$ in der Ähnlichkeitsmatrix W ermittelt wird. Insbesondere werden in einem Fall, in dem nicht genau ein Satz an wechselseitig konsistenten erwarteten Lagedaten $p_p^t$ und tatsächlichen Lagedaten pü in der Ähnlichkeitsmatrix W ermittelt wird, die erwarteten Lagedaten $p_p^t$ als Lagedaten für die Lagebestimmung des Roboters verwendet. Insbesondere kann die Anzahl an wechselseitig konsistenten erwarteten Lagedaten $p_p^t$ und tatsächlichen Lagedaten $p_u^t$ mittels einer "Eigengap-Methode" ermittelt werden. Die Verwendung der tatsächlichen Lagedaten $p_u^t$ als ausreißerfreie Lagedaten für eine Lagebestimmung des Roboters im Falle, dass genau ein Satz an wechselseitig konsistenten erwarteten Lagedaten $pp$ und tatsächlichen Lagedaten $p_u^t$ in der Ähnlichkeitsmatrix W ermittelt wird, erlaubt die erfindungsgemäße Erhöhung der Lagebestimmungsgenauigkeit und -präzision im Rahmen des vorgeschlagenen Verfahrens zur Lagebestimmung eines Roboters. In einer alternativen Ausführungsform des erfindungsgemäßen Verfahrens werden die tatsächlichen Lagedaten $p_u^t$ als ausreißerfreie Lagedaten für eine Lagebestimmung des Roboters verwendet, wenn die zuletzt bereitgestellten tatsächlichen Lagedaten $p_u^t$ in den Sätzen von jeweils wechselseitig konsistenten erwarteten Lagedaten $p_p^t$ und tatsächlichen Lagedaten pü ermittelt werden. In einer Ausführungsform des Verfahrens werden andernfalls die erwarteten Lagedaten $p_p^t$ als ausreißerfreie Lagedaten für die Lagebestimmung des Roboters verwendet.

Zusammenfassend kann das erfindungsgemäße Verfahrens dazu genutzt werden, während einer Bewegung des Roboters eine bestimmte Anzahl von erwarteten Lagedaten $p_p^t$ zu ermitteln, beispielsweise in Form ungenauer Lagedaten auf Basis einer Bewegung der Räder des Roboters, und eine bestimmte Anzahl von tatsächlichen Lagedaten pü zu ermitteln, beispielsweise in Form von verhältnismäßig genauen Lagedaten auf Basis eines LIDAR-Sensors. Mit den ermittelten erwarteten Lagedaten $p_p^t$ und den ermittelten tatsächlichen Lagedaten $p_u^t$ wird anschließend eine Ähnlichkeitsmatrix W aufgestellt, die die wechselseitige Konsistenz von jeweils erwarteten Lagedaten $p_p^t$ und tatsächlichen Lagedaten $p_u^t$ für die bestimmte Anzahl erwarteter Lagedaten $p_p^t$ und tatsächlicher Lagedaten $p_u^t$ kodiert. Anschließend werden mittels der Clusteranalyse Sätze von jeweils wechselseitig konsistenten erwarteten Lagedaten $p_p^t$ und tatsächlichen Lagedaten $p_u^t$ identifiziert. Ist nur ein einziger derartiger Satz vorhanden - d.h. die Lagedaten sind konsistent - so werden die tatsächlichen Lagedaten pü als Grundlage der weiteren Lagebestimmung, beispielsweise unter Anwendung eines Kalman-Filters, verwendet.

Es sei abschließend noch erwähnt, dass das erfindungsgemäße Verfahren auch auf die Verwendung weiterer erwarteter Lagedaten $p_p^t$ und/oder weiterer tatsächlicher Lagedaten $p_u^t$, die beispielsweise unter Verwendung weiterer Sensorvorrichtung ermittelt werden, ausgedehnt werden kann. Dabei gehen die weiteren Lagedaten ebenfalls in die Ähnlichkeitsmatrix W ein, wobei diese eine höhere Dimension annimmt.

Erfindungsgemäß wird auch eine Lagebestimmungsvorrichtung zur Verwendung in einem Roboter, insbesondere in einem autonomen Roboter, vorgeschlagen, die zumindest eine Recheneinheit aufweist, die zur Ausführung des erfindungsgemäßen Verfahrens zur Lagebestimmung eingerichtet ist.

Unter der "Recheneinheit" soll zumindest eine Vorrichtung verstanden werden, die einen Informationseingang zur Annahme von Informationen, eine Informationsverarbeitungseinheit zur Bearbeitung, insbesondere zur Berechnung von Informationen, sowie eine Informationsausgabe zur Weitergabe der bearbeiteten und/oder berechneten Informationen aufweist. Vorteilhaft weist die Recheneinheit Komponenten auf, die zumindest einen Prozessor, einen Speicher und ein Betriebsprogramm mit Auswerte- und Berechnungsroutinen umfassen. Vorteilhaft können die elektronischen Bauteile der Recheneinheit auf einer Platine angeordnet sein, beispielsweise auf einer gemeinsamen Platine mit einer Steuervorrichtung zur Steuerung des Roboters und insbesondere auch in Form eines Mikrocontrollers. Insbesondere können die Steuervorrichtung und die Recheneinheit auch als ein einzelnes Bauteil ausgeführt sein. Die Recheneinheit ist vorgesehen, Lagedaten, insbesondere erwartete Lagedaten $p_p^t$ und tatsächliche Lagedaten $p_u^t$, zu erhalten und zu verarbeiten, insbesondere auszuwerten, weiterzugeben und gegebenenfalls auch zu speichern. Insbesondere ist die Recheneinheit vorgesehen und programmiert, die Verfahrensschritte des erfindungsgemäßen Verfahrens zur Lagebestimmung des Roboters durchzuführen.

Des Weiteren wird erfindungsgemäß ein Roboter, insbesondere ein autonomer Roboter, vorgeschlagen, der zumindest eine erfindungsgemäße Lagebestimmungsvorrichtung aufweist, ferner aufweisend zumindest eine erste Sensorvorrichtung zur Ermittlung von Positionsdaten und/oder Odometriedaten und/oder Ausrichtungsdaten (zusammengefasst allgemein als "Lagedaten") und zur Bereitstellung von aus den Positionsdaten und/oder Odometriedaten und/oder Ausrichtungsdaten abgeleiteten erwarteten Lagedaten $p_p^t$, sowie eine zweite Sensorvorrichtung zur Ermittlung von Positionsdaten und/oder Odometriedaten und/oder Ausrichtungsdaten (zusammengefasst allgemein als "Lagedaten") und zur Bereitstellung von aus den Positionsdaten und/oder Odometriedaten und/oder Ausrichtungsdaten abgeleiteten tatsächlichen Lagedaten pü. Unter einer "Sensorvorrichtung" soll in diesem Zusammenhang insbesondere eine Vorrichtung verstanden werden, die dazu vorgesehen ist, zumindest eine Kenngröße und/oder eine Information und/oder eine physikalische Eigenschaft aufzunehmen, wobei die Aufnahme aktiv, wie insbesondere durch das Erzeugen, Aussenden und Erfassen eines Messsignals, und/oder passiv, wie insbesondere durch eine Erfassung von Eigenschaftsänderungen eines Sensorbauteils, stattfinden kann. Es sind verschiedene, einem Fachmann als sinnvoll erscheinende Sensorvorrichtungen denkbar, die insbesondere beispielsweise optische Sensoren, insbesondere fotografische Sensoren, akustische Sensoren, insbesondere Ultraschallsensoren, oder auch neigungs-, abstands-, translations-, beschleunigungs-, rotations-, berührungs-, induktions-, kapazitäts-, temperatur-, feuchte-, strahlungs-, chemosensitive Sensoren oder dergleichen umfassen können. Zumindest weist die Sensorvorrichtung Sensoren zur Detektion eines Hindernisses und/oder einer Begrenzung der Bearbeitungsfläche auf.

Insbesondere kann das autonome Roboter als eine autonome Kehrmaschine, ein autonomer Reinigungsroboter, ein autonomer Schneeräumroboter, ein autonomer Staubsauger, eine autonome Schwimmbadreinigungsmaschine, ein autonomer Bodenwischroboter, ein autonomer Rasenmäher, eine autonome Sähmaschinen, eine autonome Düngemaschinen, eine autonome Kartierungsmaschinen oder eine andere, dem Fachmann sinnvoll erscheinende Ausführungsform eines autonomen Roboters realisiert sein.

Zeichnungen

Die Erfindung ist anhand von in den Zeichnungen dargestellten Ausführungsbeispielen in der nachfolgenden Beschreibung näher erläutert. Die Zeichnung, die Beschreibung und die Ansprüche enthalten zahlreicher Merkmale in Kombination. Der Fachmann wird die Merkmale zweckmäßigerweise auch einzeln betrachten und zu sinnvollen weiteren Kombinationen zusammenfassen. Gleiche Bezugszeichen in den Figuren bezeichnen gleiche Elemente.

Es zeigen:

Figur 1     eine Ausführungsform eines erfindungsgemäßen autonomen Roboters in einer perspektivischen, schematischen Darstellung;

Figur 2     ein Ablaufdiagramm einer Ausführungsform des erfindungsgemäßen Verfahrens zur Lagebestimmung.

Beschreibung der Ausführungsbeispiele

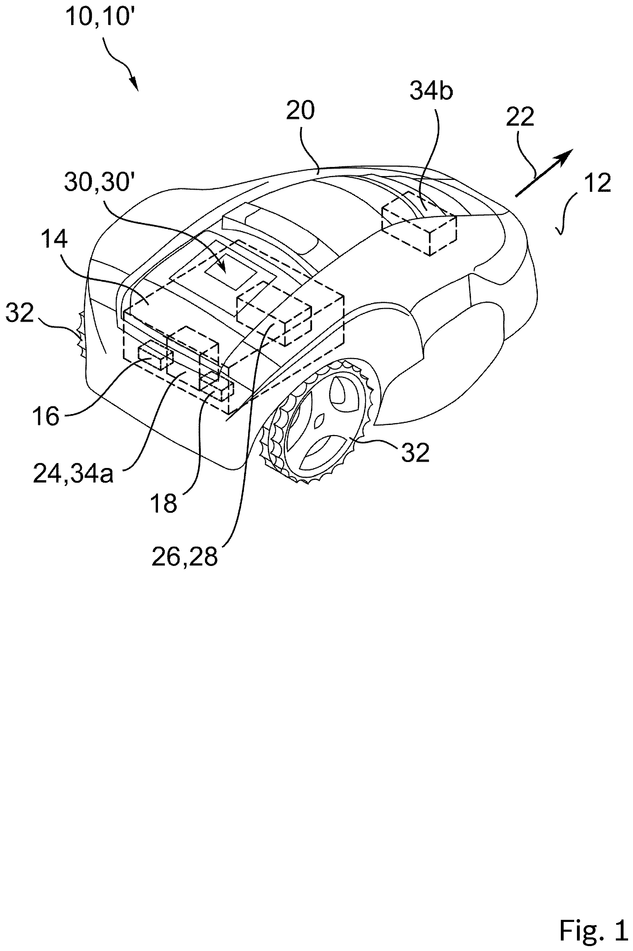

Figur 1 zeigt eine Ausführungsform eines Roboters 10, wie er beispielsweise als ein autonomer Roboter in Form eines autonomen Rasenmähers 10' realisiert sein kann. Der Roboter 10 kann beispielsweise dazu vorgesehen, eine Fläche 12, auf der er sich bewegt, in irgendeiner Form zu bearbeiten. Die im Folgenden beschriebenen Grundsätze sind im Rahmen anderer Ausführungsbeispiele auf beliebige Ausführungen des Roboters 10 übertragbar, die vielfältige Aufgabe erfüllen können, beispielsweise als Staubsaugerroboter, Kehrroboter, Reinigungsroboter, Schneeräumroboter, Bodenwischroboter, insbesondere aber auch lediglich als Kartierungsroboter ohne weitere Bearbeitungsfunktion.

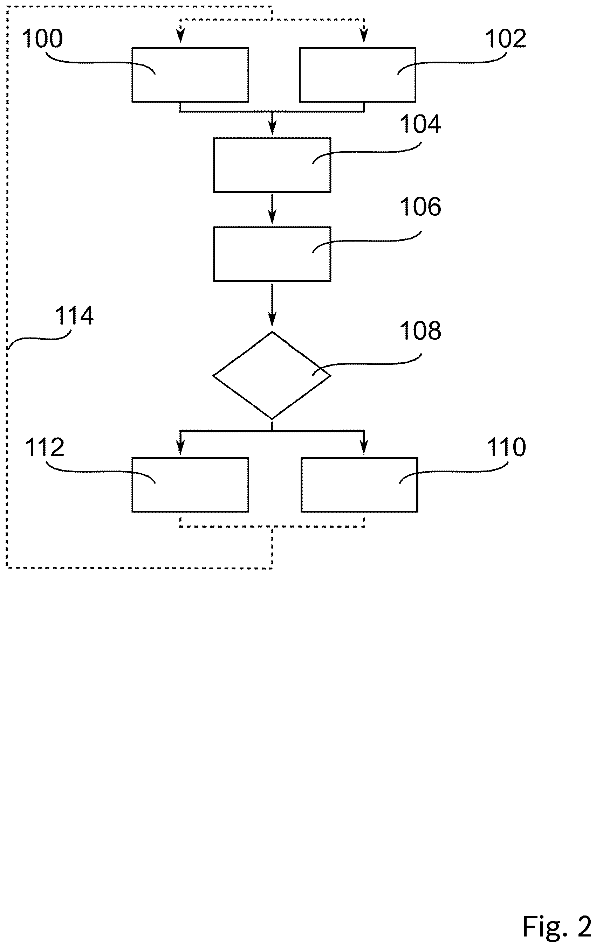

Der Roboter 10 in Figur 1, in der beispielhaften Ausführungsform eines autonomen Rasenmäher 10', weist eine Steuervorrichtung 14 auf. Die Steuervorrichtung 14 weist zumindest eine Speichereinheit 16, einen Prozessor (nicht näher dargestellt) sowie eine Datenkommunikationsschnittstelle 18 zur Datenübertragung auf. Die Steuervorrichtung 14 ist samt ihrer Komponenten zumindest teilweise in einem Gehäuse 20 des Roboters 10 angeordnet. Die Datenkommunikationsschnittstelle 18 dient der Datenübertragung, insbesondere der kabellosen oder kabelgebunden Datenübertragung, insbesondere zur Datenübertragung an externe Geräte, beispielsweise Tablets, Smartphones, Computer, weitere Roboter oder dergleichen. Die Steuervorrichtung 14 ist insbesondere dazu vorgesehen, die Bewegung (angedeutet durch einen Pfeil 22) des Roboters 10 zu steuern oder zu regeln und insbesondere die Bewegung des Roboters 10 unter Verwendung einer Antriebseinheit 24 zur Bewegung des Roboters 10 zu realisieren. Der Roboter 10 weist ferner eine Lagebestimmungsvorrichtung 26 auf, die zumindest eine Recheneinheit 28 umfasst, die zur Durchführung des erfindungsgemäßen Verfahrens (vgl. Figur 2) eingerichtet und programmiert ist. Des Weiteren weist der Roboter 10 eine Benutzerschnittstelle 30 auf, über die Informationen an einen Bediener ausgegeben werden können oder Informationen von einem Bediener eingegeben werden können. Insbesondere ist die Ausgabeeinheit 30 von einem Touch-Display 30' gebildet.

Zur Fortbewegung weist der Roboter 10, insbesondere der autonome Rasenmäher 10', Räder 32 auf, die dem Antrieb und der Richtungsänderung des Roboters 10 dienen. Die Räder 32 sind mit einem Motor (hier nicht dargestellt) gekoppelt und können mittels der Antriebseinheit 24 zur Bewegung des Roboters 10 gesteuert und bewegt werden.

Eine Energieversorgungsvorrichtung (hier nicht dargestellt) des autonomen Roboters 10 ist dazu vorgesehen, den Roboter 10 zur Inbetriebnahme und während des Betriebs mit elektrischer Energie zu versorgen. Bevorzugt handelt es sich bei dieser Vorrichtung um einen stromnetzunabhängigen Energiespeicher, insbesondere einen Akkumulator.

Insbesondere lässt sich die Energieversorgungsvorrichtung zur Energieversorgung in und/oder außerhalb des autonomen Roboters 10 wieder mit Energie aus einem Stromnetz versorgen und laden.

Der Roboter 10, insbesondere die Lagebestimmungsvorrichtung 26, weist ferner eine erste Sensorvorrichtung 34a zur Ermittlung von Positionsdaten und Ausrichtungsdaten auf. Die erste Sensorvorrichtung 34a ist in diesem Ausführungsbeispiel dazu vorgesehen, unmittelbar mit der Antriebseinheit 24 zur Bewegung des Roboters zu kommunizieren. Mittels der ersten Sensorvorrichtung 34a lassen sich aus der Bewegung, insbesondere in Folge einer Vermessung der Drehung der Räder 32, Rückschlüsse auf die zurückgelegte Streckenlänge des Roboters 10 ziehen. Ebenfalls detektiert die erste Sensorvorrichtung 34a Winkeländerungen zwischen zurückgelegten Bahnen oder Streckenstücken.

Aus diesen Winkeln und zurückgelegten Streckenlängen werden erwartete Lagedaten $p_p^t$ in Form von zweidimensionalen Koordinaten des autonomen Roboters 10 bezüglich der Fläche 12, auf die der Roboter 10 sich bewegt, ermittelt. Die erste Sensorvorrichtung 34a ist ferner dazu vorgesehen, die aus den ermittelten Positionsdaten und Ausrichtungsdaten ermittelten erwarteten Lagedaten $p_p^t$ der Recheneinheit 28 der Lagebestimmungsvorrichtung 26 bereitzustellen.

Es sei darauf hingewiesen, dass die erste Sensorvorrichtung 34a zur Bereitstellung der erwarteten Lagedaten $p_p^t$ auch dazu vorgesehen sein kann, Lagedaten unter Verwendung einer Mehrzahl von Sensoren, beispielsweise unter Verwendung von GPS-Sensoren oder Ultraschall-Sensoren, bereitzustellen. Beispielsweise können aus den von dieser Mehrzahl von Sensoren bereitgestellten Sensordaten die erwarteten Lagedaten $p_p^t$ berechnet werden, insbesondere fusioniert oder gemittelt werden.

In einem alternativen, nicht näher dargestellten, Ausführungsbeispiel des Roboters 10 kann die erste Sensorvorrichtung 34a oder die Lagebestimmungsvorrichtung 26 dazu vorgesehen, die erwarteten Lagedaten $p_p^t$ basierend auf gemessenen Positions- und Ausrichtungsdaten der ersten Sensorvorrichtung 34a und basierend auf zuvor bestimmten tatsächlichen Lagedaten $p_u^t$ zu fusionieren und bereitzustellen.

Der Roboter 10, insbesondere die Lagebestimmungsvorrichtung 26, weist ferner eine zweite Sensorvorrichtung 34b zur Ermittlung von Positionsdaten und Ausrichtungsdaten auf. Die zweite Sensorvorrichtung 34b ist in diesem Ausführungsbeispiel als ein Lidar-Sensor ausgebildet und dazu vorgesehen, in Folge einer Vermessung der Umgebung des Roboters 10 Rückschlüsse auf die aktuelle Lage des Roboters 10 zu ziehen. Dabei werden gemessene Entfernungen zu den Roboter 10 umgebenden Gegenständen (hier nicht näher dargestellt) mit Lagedaten einer digitalen Karte im Rahmen eines Kartenabgleich-Verfahrens abgeglichen und derart tatsächliche Lagedaten $p_u^t$ mittels eines Kartenabgleich-Verfahrens von mittels der zweiten Sensorvorrichtung 34b bereitgestellten Lagedaten ermittelt und der Lagebestimmungsvorrichtung 26 bereitgestellt. Die digitale Karte der Umgebung liegt in diesem Ausführungsbeispiel als auf der Speichereinheit 16 des Roboters 10 geräteintern abgespeicherte Karte vor. Die digitale Karte wird bei einer initialen Einlernfahrt aufgenommen und abgespeichert. Figur 2 zeigt ein Verfahrensdiagramm einer beispielhaften Ausführungsform des erfindungsgemäßen Verfahrens zur Lagebestimmung eines Roboters 10, insbesondere eines autonomen Roboters 10', wie es im Zusammenhang mit Figur 1 beschrieben ist. In einem ersten Verfahrensschritt 100 werden erwartete Lagedaten $p_p^t$ zu einer erwarteten Lage des Roboters 10 bereitgestellt. Die erwarteten Lagedaten $p_p^t$ werden unter Verwendung der ersten Sensorvorrichtung 34a, insbesondere als ungenaue Lagedaten, erfasst und bereitgestellt.

In Verfahrensschritt 102 werden tatsächliche Lagedaten $p_u^t$ zu einer tatsächlichen Lage des Roboters 10 bereitgestellt. Die tatsächlichen Lagedaten pü werden unter Verwendung der zweiten Sensorvorrichtung 34b, insbesondere als verhältnismäßig genaue Lagedaten, erfasst und bereitgestellt. In einem Verfahrensschritt 104 wird eine Ähnlichkeitsmatrix W als $(5 \times 5)$-Matrix basierend auf jeweils 5 erwarteten Lagedaten $p_p^t$ und 5 tatsächlichen Lagedaten $p_u^t$, die zu 5 äquidistanten Zeiten $[t_0, t_1, t_2, t_3, t_4]$ bereitgestellt werden, aufgestellt. Die Anzahl "5" und die damit zusammenhängenden äquidistanten Zeiten $[t_0, t_1, t_2, t_3, t_4]$ sind derart gewählt, dass bei vorgegebener mittlerer Verfahrgeschwindigkeit alle 10 cm jeweils ein 1 Satz von jeweils 5 erwarteten Lagedaten $pp$ und 5 tatsächlichen Lagedaten $p_u^t$ der Lagebestimmungsvorrichtung 30 bereitgestellt wird (d.h. hier: $t_0 = 2$ s, $t_1 = 4$ s, $t_2 = 6$ s, $t_3 = 8$ s, $t_4 = 10$ s). Somit kann eine Auflösungsgenauigkeit der Lage des Roboters 10 von $\pm 10$ cm erreicht werden. In Verfahrensschritt 106 wird anschließend eine Clusteranalyse der Ähnlichkeitsmatrix W durchgeführt und dabei Sätze von jeweils wechselseitig konsistenten erwarteten Lagedaten $p_p^t$ und tatsächlichen Lagedaten $pü$ abgeleitet oder bestimmt. In Verfahrensschritt 108 wird geprüft, ob genau ein Satz an wechselseitig konsistenten erwarteten Lagedaten $p_p^t$ und tatsächlichen Lagedaten *pü* in der Ähnlichkeitsmatrix W vorliegt. Wird diese Prüfung bestätigt, so werden in Verfahrensschritt 110 die tatsächlichen Lagedaten *pü* als ausreißerfreie Lagedaten für die Lagebestimmung des Roboters 10 verwendet. Wird diese Prüfung jedoch nicht bestätigt, so werden in Verfahrensschritt 112 die erwarteten Lagedaten $p_p^t$ für die Lagebestimmung des Roboters 10 verwendet.

In einer alternativen Ausführungsform des Verfahrens kann in Verfahrensschritt 108 auch geprüft werden, ob die zuletzt bereitgestellten tatsächlichen Lagedaten *pü* in den Sätzen von jeweils wechselseitig konsistenten erwarteten Lagedaten $p_p^t$ und tatsächlichen Lagedaten $p_u^t$ ermittelt werden. Wird diese Prüfung bestätigt, so werden in einem alternativen Verfahrensschritt 110 die tatsächlichen Lagedaten *pü* als ausreißerfreie Lagedaten für die Lagebestimmung des Roboters 10 verwendet. Wird diese Prüfung jedoch nicht bestätigt, so werden in einem alternativen Verfahrensschritt 112 die erwarteten Lagedaten $p_p^t$ für die Lagebestimmung des Roboters 10 verwendet.

Das erfindungsgemäße Verfahren wird wiederholt durchlaufen, wie in Figur 2 durch einen Pfeil 114 angedeutet.

**Patentansprüche**

1. Verfahren zur Lagebestimmung eines Roboters (10), insbesondere eines autonomen Roboters (10'), umfassend zumindest

   - einen Verfahrensschritt, in dem erwartete Lagedaten $p_p^t$ zu einer erwarteten Lage des Roboters (10) bereitgestellt werden,
   - einen Verfahrensschritt, in dem tatsächliche Lagedaten pü zu einer tatsächlichen Lage des Roboters (10) bereitgestellt werden,

   und einen Verfahrensschritt, in dem unter Verwendung der erwarteten Lagedaten $p_p^t$ und der tatsächlichen Lagedaten $p_u^t$ ausreißerfreie Lagedaten ermittelt werden, die für die Lagebestimmung des Roboters (10) verwendet werden, wobei wechselseitig konsistente erwartete Lagedaten $p_p^t$ und tatsächliche Lagedaten $p_u^t$ unter Aufstellung einer Ähnlichkeitsmatrix ermittelt werden **dadurch gekennzeichnet, dass** die Ähnlichkeitsmatrix als ($n \times n$)-Matrix basierend auf jeweils n erwarteten Lagedaten $p_p^t$ und n tatsächlichen Lagedaten $p_u^t$, die jeweils zu n Zeiten [$t_s$, $t_{s+1}$, ... $t_{s+n-1}$], bevorzugt n äquidistanten Zeiten, bereitgestellt werden, aufgestellt wird.

2. Verfahren nach Anspruch 1, **dadurch gekennzeichnet, dass** zur Bestimmung ausreißerfreier Lagedaten wechselseitig konsistente erwartete Lagedaten $p_p^t$ und tatsächliche Lagedaten $p_u^t$ mittels einer Ähnlichkeitsanalyse der erwarteten Lagedaten $p_p^t$ und der tatsächlichen Lagedaten $p_u^t$ ermittelt werden.

3. Verfahren nach einem der vorhergehenden Ansprüche, **dadurch gekennzeichnet, dass** die Anzahl n, insbesondere der zeitliche Abstand der Zeiten [$t_s$, $t_{s+1}$, ... $t_{s+n-1}$], durch Vorgabe einer Auflösungsgenauigkeit der Lagebestimmung definiert wird.

4. Verfahren nach einem der vorhergehenden Ansprüche, **dadurch gekennzeichnet, dass** n $\geq$ 3, bevorzugt n $\geq$ 5, besonders bevorzugt n $\geq$ 7.

5. Verfahren nach einem der vorhergehenden Ansprüche, **dadurch gekennzeichnet, dass** mittels Clusteranalyse der Ähnlichkeitsmatrix Sätze von jeweils wechselseitig konsistenten erwarteten Lagedaten $p_p^t$ und tatsächlichen Lagedaten $p_u^t$ ermittelt werden.

6. Verfahren nach Anspruch 5, **dadurch gekennzeichnet, dass** die tatsächlichen Lagedaten $p_u^t$ als ausreißerfreie Lagedaten für eine Lagebestimmung des Roboters (10) verwendet werden, wenn genau ein Satz an wechselseitig konsistenten erwarteten Lagedaten $p_p^t$ und tatsächlichen Lagedaten $p_u^t$ in der Ähnlichkeitsmatrix ermittelt wird.

7. Verfahren nach Anspruch 5, **dadurch gekennzeichnet, dass** die tatsächlichen Lagedaten $p_u^t$ als ausreißerfreie Lagedaten für eine Lagebestimmung des Roboters (10) verwendet werden, wenn die zuletzt bereitgestellten tatsächlichen Lagedaten $p_u^t$ in den Sätzen von jeweils wechselseitig konsistenten erwarteten Lagedaten $p_p^t$ und tatsächlichen Lagedaten pü ermittelt werden.

8. Verfahren nach einem der vorhergehenden Ansprüche, **dadurch gekennzeichnet, dass** die erwarteten Lagedaten $p_p^t$ mittels zumindest einer ersten Sensorvorrichtung (34a) des Roboters (10) bereitgestellt werden.

9. Verfahren nach einem der vorhergehenden Ansprüche, **dadurch gekennzeichnet, dass** die erwarteten Lagedaten $p_p^t$ basierend auf zuvor bestimmten tatsächlichen Lagedaten $p_u^t$ bereitgestellt werden.

10. Verfahren nach einem der vorhergehenden Ansprüche, **dadurch gekennzeichnet, dass** die tatsächlichen Lagedaten $p_u^t$ mittels zumindest einer zweiten Sensorvorrichtung (34b) des Roboters (10) bereitgestellt werden, insbesondere als absolute Lagedaten erfasst und bereitgestellt werden.

11. Verfahren nach Anspruch 10, **dadurch gekennzeichnet, dass** die tatsächlichen Lagedaten pü mittels eines Kartenabgleich-Verfahrens von mittels der ersten Sensorvorrichtung (34a) und/oder mittels der zweiten Sensorvorrichtung (34b) bereitgestellten Lagedaten ermittelt werden.

12. Lagebestimmungsvorrichtung (26) eines Roboters (10), insbesondere eines autonomen Roboters (10'), aufweisend zumindest eine Recheneinheit (28), eingerichtet zur Ausführung eines Verfahrens zur Lagebestimmung nach einem der Ansprüche 1-11.

13. Roboter (10), insbesondere autonomer Roboter (10'), aufweisend zumindest eine Lagebestimmungsvorrichtung (26) nach Anspruch 12, ferner aufweisend zumindest

- eine erste Sensorvorrichtung (34a) zur Ermittlung von Positionsdaten und/oder Odometriedaten und/oder Ausrichtungsdaten und zur Bereitstellung von aus den Positionsdaten und/oder Odometriedaten und/oder Ausrichtungsdaten abgeleiteten erwarteten Lagedaten $p_p^t$ ,
- eine zweite Sensorvorrichtung (34b) zur Ermittlung von Positionsdaten und/oder Odometriedaten und/oder Ausrichtungsdaten und zur Bereitstellung von aus den Positionsdaten und/oder Odometriedaten und/oder Ausrichtungsdaten abgeleiteten tatsächlichen Lagedaten $p_u^t$ .

**Claims**

1. Method for determining the position of a robot (10), in particular of an autonomous robot (10'), comprising at least

- a method step in which expected position data $p_p^t$ regarding an expected position of the robot (10) are provided,
- a method step in which actual position data $p_u^t$ regarding an actual position of the robot (10) are provided,

and a method step in which position data that are free from outliers and that are used to determine the position of the robot (10) are determined using the expected position data $p_p^t$ and the actual position data $p_u^t$ , wherein mutually consistent expected position data $p_p^t$ and actual position data $p_u^t$ are determined by creating a similarity matrix, **characterized in that** the similarity matrix is created in the form of an ($n \times n$) matrix based on in each case n expected position data $p_p^t$ and n actual position data $p_u^t$ that are provided in each case at n times [$t_s$, $t_{s+1}$, ...,

$t_{s+n-1}$] , preferably n equidistant times.

2. Method according to Claim 1, **characterized in that**, in order to determine position data that are free from outliers, mutually consistent expected position data $p_p^t$ and actual position data $p_u^t$ are determined by way of similarity analysis of the expected position data $p_p^t$ and of the actual position data $p_u^t$ .

3. Method according to either of the preceding claims, **characterized in that** the number n, in particular the time difference between the times [$t_s$, $t_{s+1}$, ..., $t_{s+n-1}$], is defined by specifying a resolution accuracy of the position determination.

4. Method according to one of the preceding claims, **characterized in that** $n \geq 3$, preferably $n \geq 5$, particularly preferably $n \geq 7$.

5. Method according to one of the preceding claims, **characterized in that** sets of in each case mutually consistent expected position data $p_p^t$ and actual position data $p_u^t$ are determined by way of cluster analysis of the similarity matrix.

6. Method according to Claim 5, **characterized in that** the actual position data $p_u^t$ are used as position data that are free from outliers to determine the position of the robot (10) if precisely one set of mutually consistent expected position data $p_p^t$ and actual position data $p_u^t$ is determined in the similarity matrix.

7. Method according to Claim 5, **characterized in that** the actual position data $p_u^t$ are used as position data that are free from outliers to determine the position of the robot (10) if the last provided actual position data $p_u^t$ are determined in the sets of in each case mutually consistent expected position data $p_p^t$ and actual position data $p_u^t$ .

8. Method according to one of the preceding claims, **characterized in that** the expected position data $p_p^t$ are provided by way of at least a first sensor device (34a) of the robot (10).

9. Method according to one of the preceding claims, **characterized in that** the expected position data $p_p^t$ are provided based on previously determined actual position data $p_u^t$ .

10. Method according to one of the preceding claims, **characterized in that** the actual position data $p_u^t$ are provided, in particular recorded in the form of absolute position data and provided, by way of at least a second sensor device (34b) of the robot (10).

11. Method according to Claim 10, **characterized in that** the actual position data $p_u^t$ are determined by way of a map comparison method from position data provided by way of the first sensor device (34a) and/or by way of the second sensor device (34b).

12. Position determination device (26) of a robot (10), in particular of an autonomous robot (10'), having at least one computer unit (28) configured so as to execute a position determination method according to one of Claims 1-11.

13. Robot (10), in particular autonomous robot (10'), having at least a position determination device (26) according to Claim 12, furthermore having at least

- a first sensor device (34a) for determining positional data and/or odometry data and/or orientation data and for providing expected position data $p_p^t$ derived from the positional data and/or odometry data and/or orientation data,

- a second sensor device (34b) for determining positional data and/or odometry data and/or orientation data and for providing actual position data $p_u^t$ derived from the positional data and/or odometry data and/or orientation data.

**Revendications**

1. Procédé de localisation d'un robot (10), notamment d'un robot autonome (10'), ledit procédé comprenant au moins

   - une étape de procédé dans laquelle des données de localisation attendue $p_p^t$ sont fournies pour une localisation attendue du robot (10),
   - une étape de procédé dans laquelle des données de localisation réelle pû sont fournies pour une localisation réelle du robot (10), et

   - une étape de procédé dans laquelle, à l'aide des données de localisation attendue $p_p^t$ et des données de localisation réelle $p_u^t$, des données de localisation exemptes de valeurs aberrantes sont déterminées qui sont utilisées pour localiser le robot (10), des données de localisation attendue $p_p^t$ et des données de localisation réelle $p_u^t$, mutuellement cohérentes étant déterminées par établissement d'une matrice de similarité, **caractérisé en ce que** la matrice de similarité est établie sous la forme d'une matrice (n × n) basée sur n données de localisation attendue $p_p^t$ et n données de localisation réelle $p_u^t$ qui sont chacune fournies à n instants [$t_s$, $t_{s+1}$, ... $t_{s+n-1}$], de préférence n instants équidistants.

2. Procédé selon la revendication 1, **caractérisé en ce que**, pour déterminer des données de localisation exemptes de valeurs aberrantes, des données de localisation attendue $p_p^t$ et des données de localisation réelle pû mutuellement cohérentes sont déterminées au moyen d'une analyse de similarité des données de localisation attendue $p_p^t$ et des données de localisation réelle $p_u^t$.

3. Procédé selon l'une des revendications précédentes, **caractérisé en ce que** le nombre n, notamment l'intervalle de temps entre les instants [$t_s$, $t_{s+1}$, ... $t_{s+n-1}$], est défini par spécification d'une précision de résolution de la localisation.

4. Procédé selon l'une des revendications précédentes, **caractérisé en ce que** n ≥ 3, de préférence n ≥ 5, de manière particulièrement préférée n ≥ 7.

5. Procédé selon l'une des revendications précédentes, **caractérisé en ce que** des ensembles de données de localisation attendue $p_p^t$ et de données de localisation réelle $p_u^t$ mutuellement cohérentes sont déterminés au moyen d'une analyse par grappes de la matrice de similarité.

6. Procédé selon la revendication 5, **caractérisé en ce que** les données de localisation réelle pû sont utilisées comme données de localisation exemptes de valeur aberrante pour localiser le robot (10) si exactement un ensemble de données de localisation attendue $p_p^t$ et de données de localisation réelle $p_u^t$ mutuellement cohérentes est déterminée dans la matrice de similarité.

7. Procédé selon la revendication 5, **caractérisé en ce que** les données de localisation réelle pû sont utilisées comme données de localisation exemptes de valeurs aberrantes pour localiser le robot (10) si les dernières données de localisation réelle pû fournies sont déterminées dans les ensembles de données de localisation attendue $p_p^t$ et de données de localisation réelle pû mutuellement cohérentes.

8. Procédé selon l'une des revendications précédentes, **caractérisé en ce que** les données de localisation attendue

$p_p^t$ sont fournies par au moins un premier dispositif capteur (34a) du robot (10).

9. Procédé selon l'une des revendications précédentes, **caractérisé en ce que** les données de localisation attendue $p_p^t$ sont fournies sur la base des données de localisation réelle $p_u^t$ préalablement déterminées.

10. Procédé selon l'une des revendications précédentes, **caractérisé en ce que** les données de localisation réelle pû sont fournies au moyen d'au moins un deuxième dispositif capteur (34b) du robot (10), notamment enregistrées et fournies comme données de localisation absolue.

11. Procédé selon la revendication 10, **caractérisé en ce que** les données de localisation réelle pû sont déterminées au moyen d'un processus cartospondance à partir de données de localisation fournies par le premier dispositif capteur (34a) et/ou par le deuxième dispositif capteur (34b).

12. Dispositif de localisation (26) d'un robot (10), notamment d'un robot autonome (10'), comportant au moins une unité de calcul (28), conçue pour mettre en œuvre un procédé de localisation selon l'une des revendications 1 à 11.

13. Robot (10), notamment robot autonome (10'), comportant au moins un dispositif de localisation (26) selon la revendication 12, ledit robot comportant en outre au moins

   - un premier dispositif capteur (34a) destiné à déterminer des données de position et/ou des données d'odométrie et/ou des données d'orientation et pour fournir des données de localisation attendue $p_p^t$ dérivées des données de position et/ou des données d'odométrie et/ou des données d'orientation,
   - un deuxième dispositif capteur (34b) destiné à déterminer des données de position et/ou des données d'odométrie et/ou des données d'orientation et pour fournir des données de localisation réelle pû dérivées des données de position et/ou des données d'odométrie et/ou des données d'orientation.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014211178 A1
- WO 2017076929 A1
- EP 2749983 A2
- WO 2017066904 A1

**In der Beschreibung aufgeführte Nicht-Patentliteratur**

- **GOEL P et al.** Robust localization using relative and absolute position estimates. *INTELLIGENT RO-BOTS AND SYSTEMS,* 1999
- A tutorial on spectral clustering. **VON LUXBURG.** Statistics and computing. Springer Verlag, 2007